Europäisches Patentamt

European Patent Office

Office européen des brevets

(19)

(11) Numéro de publication : **0 007 268**
**B1**

(12)

# FASCICULE DE BREVET EUROPÉEN

(45) Date de publication du fascicule du brevet :
24.02.82

(51) Int. Cl.³ : **G 02 B   5/32**

(21) Numéro de dépôt : 79400431.7

(22) Date de dépôt : 27.06.79

(54) **Source de rayonnement optique destinée à fournir un faisceau divergent d'ouverture angulaire uniformisée.**

(30) Priorité : 10.07.78 FR 7820541

(43) Date de publication de la demande :
23.01.80 (Bulletin 80/02)

(45) Mention de la délivrance du brevet :
24.02.82 Bulletin 82/08

(84) Etats contractants désignés :
DE GB NL SE

(56) Documents cités :
FR - A - 2 309 885
US - A - 3 628 849
APPLIED OPTICS, vol. 17, no 8, 15 avril 1978,
New York, USA
W.C. SWEATT : « Designing and constructing
thick holographic optical elements », pages
1 220-1 227.

(73) Titulaire : THOMSON-CSF
173, Boulevard Haussmann
F-75360 Paris Cedex 08 (FR)

(72) Inventeur : Huignard, Jean-Pierre
"THOMSON-CSF" - SCPI 173, bld Haussmann
F-75360 Paris Cedex 08 (FR)

(74) Mandataire : Turlèque, Clotilde et al
"THOMSON-CSF" - SCPI 173, bld Haussmann
F-75360 Paris Cedex 08 (FR)

Imprimerie Jouve, 18, rue St-Denis, 75001 Paris, France

# Source de rayonnement optique destinée à fournir un faisceau divergent d'ouverture angulaire uniformisée

Le problème se pose, dans de nombreuses applications de l'optique, comme le stockage d'informations optiques, ou la visualisation, de disposer d'un faisceau lumineux cohérent rayonnant de façon homogène dans toutes les directions, afin d'obtenir une bonne focalisation, sur un support photosensible. En effet, on utilise de plus en plus fréquemment comme source de rayonnement des lasers semiconducteurs, comme le laser AsGa, à cause de leur facilité d'utilisation et de leur faible coût. Or, les angles d'émission des lasers semiconducteurs dans des plans différents ont des valeurs très différentes. L'anisotropie de leur diagramme de rayonnement est liée à la section droite de la cavité optique émissive, d'épaisseur très faible par rapport à sa largeur. D'où la nécessité de modifier l'angle solide où est contenu le rayonnement en associant à la source laser des moyens optiques tels que l'on obtienne un rayonnement de même ouverture angulaire dans deux plans perpendiculaires ayant pour intersection l'axe d'émission de la jonction. Différentes structures sont déjà connues qui visent à ce résultat : certaines utilisent des composants optiques classiques à surfaces sphériques et cylindriques qui anamorphosent le rayonnement dans un plan et pas dans l'autre ; mais ces structures ne permettent pas d'obtenir un stigmatisme rigoureux. Dans le cas de l'application au couplage dans un fibre optique, il a été proposé l'utilisation d'une fibre « selfoc » associée à une lentille cylindrique ; les problèmes de réglage sont alors délicats à résoudre car il n'y a pas d'aplanétisme et le stigmatisme n'est pas non plus obtenu.

Le dispositif optique selon l'invention donne une solution simple au problème posé avec un seul composant, en simplifiant le problème du réglage et en assurant, quelle que soit l'ouverture du système optique, que l'image de la source par le composant proposé émette un faisceau d'axe prédéterminé assimilable au faisceau d'ouverture angulaire uniforme produit par une source ponctuelle. L'invention utilise les propriétés de stigmatisme et d'aplanétisme des réseaux holographiques concaves qui, à condition de satisfaire certaines conditions sur les longueurs d'onde d'enregistrement et de restitution et l'emplacement des sources d'enregistrement, permettent de diffracter le faisceau émis par la source laser en un faisceau d'ouverture angulaire différente en conjuguant la source laser avec une pupille de sortie.

Les propriétés de stigmatisme et d'aplanétisme des réseaux holographiques concaves sont mentionnées dans le brevet français N° 2 309 885 où elles sont utilisées pour la réalisation d'un objectif catadioptrique comportant une seule surface réfléchissante.

L'invention vise donc une source de rayonnement optique destinée à fournir un faisceau divergent d'ouverture angulaire uniformisée à partir d'un laser semiconducteur à pupille émissive allongée dont les angles d'émission mesurés dans deux plans perpendiculaires contenant l'axe d'émission sont inégaux ; ladite source comprenant outre ledit laser semiconducteur des moyens optiques uniformisateurs de ladite ouverture angulaire, et étant caractérisée en ce que lesdits moyens optiques uniformisateurs sont constitués par un réseau holographique concave (8) conjuguant le sommet (C) dudit faisceau divergent et le centre (A) de ladite pupille émissive allongée situé sur ledit axe d'émission (OA) ; la ligne joignant le sommet (C) et le centre (A) étant contenue dans celui desdits plans perpendiculaires ($P_1$, $P_2$) ayant l'angle d'émission ($X_1$) le plus ouvert ; ledit réseau holographique concave (8) recevant perpendiculairement les rayons de ladite pupille émissive allongée.

L'invention sera mieux comprise et d'autres caractéristiques apparaîtront au moyen de la description ci-après et des figures qui l'accompagnent, parmi lesquelles :

la figure 1 illustre les propriétés de rayonnement d'une jonction semiconductrice ;

la figure 2 montre la formation d'un réseau holographique concave ;

la figure 3 illustre la restitution du réseau enregistré selon la figure 2 ;

la figure 4 illustre l'application des propriétés des réseaux concaves à l'anamorphose d'un faisceau lumineux ;

les figures 5 et 6 illustrent l'enregistrement et la restitution d'un hologramme à trois dimensions transmissif et réfléchissant ;

la figure 7 donne un exemple de formation des deux faisceaux d'enregistrement ;

la figure 8 représente une source selon l'invention.

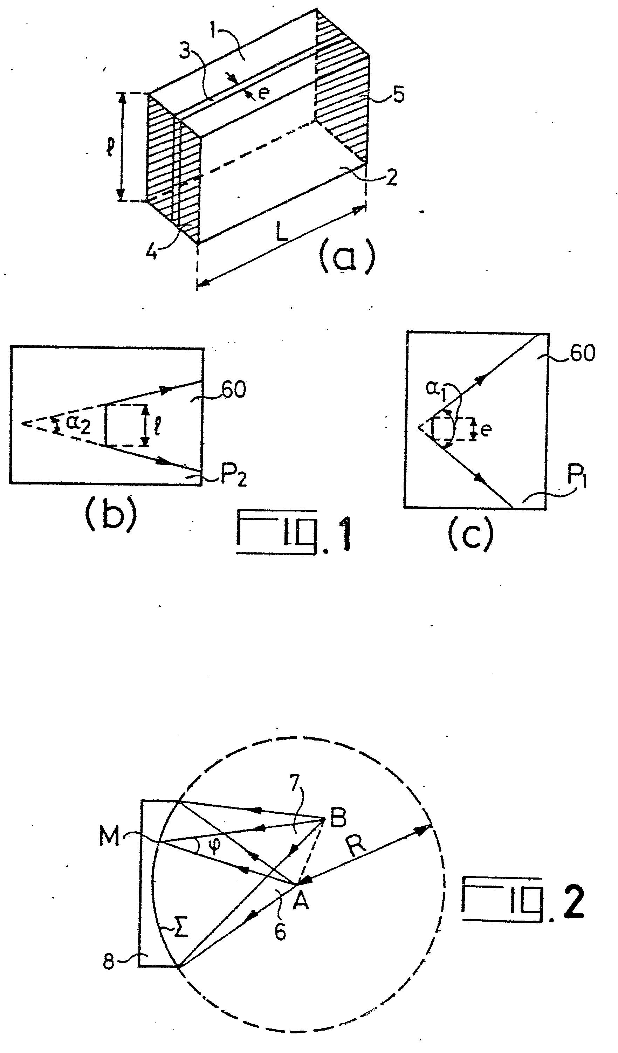

La figure 1 illustre l'anisotropie du diagramme de rayonnement d'un laser semiconducteur. Un tel laser est représenté en (a). Il comprend une couche semiconductrice 1 de type n et une couche semiconductrice 2 de type p séparées par une jonction 3. La fabrication du laser comprend la réalisation d'une cavité de Perot-Fabry directement sur la jonction par découpe convenable du semiconducteur. Les faces réfléchissantes de la cavité sont les faces transversales 4 et 5 (hachurées sur la figure), distantes d'une longueur L qui est la longueur de la jonction. L'une des faces 4 émet un rayonnement cohérent de longueur d'onde $\lambda$. La surface d'émission obtenue est rectangulaire puisque l'épaisseur e de la jonction est plus faible que sa largeur l. La figure de diffraction de la source obtenue n'est pas un cercle. En (b), est représenté le diagramme de rayonnement de la jonction dans le plan $P_2$ de la jonction. Si l'on suppose le rayonnement émis 60 monomode, l'angle d'émission dans ce plan est $\alpha_2$ et les lois de la diffraction donnent $\mathrm{tg}\,\alpha_2 = \dfrac{\lambda}{l}$. En (c), est

représenté le diagramme de rayonnement de la jonction dans le plan $P_1$ perpendiculaire à la jonction. L'angle d'émission est $\alpha_1$, les lois de la diffraction donne tg $\alpha_1 = \dfrac{\lambda}{e}$. Par exemple, un laser en arséniure de gallium émet un rayonnement de longueur d'onde $\lambda = 0,9\ \mu m$ ; et on a pu mesurer $\alpha_1 = 60°$ et $\alpha_2 = 20°$. La différence entre les angles dans les deux plans est donc très importante. Si le rayonnement est multimode, la différence est encore plus grande. L'objet de l'invention est de réduire le plus possible cette différence en utilisant les propriétés de stigmatisme des réseaux holographiques concaves.

La figure 2 montre la formation d'un réseau holographique obtenu par l'impression, sur une couche photosensible 8, des franges d'interférence de deux ondes lumineuses sphériques 6 et 7 respectivement issues de deux sources ponctuelles A et B cohérentes, en phase, de même longueur d'onde $\lambda_0$, éclairant la couche 8. La valeur de la longueur d'onde $\lambda_0$ est choisie dans la gamme des longueurs d'onde à laquelle la couche 8 est sensible avec une haute résolution. La face $\Sigma$ de la couche exposée aux ondes 6 et 7 est une surface sphérique de rayon R et de centre A, c'est-à-dire l'une des deux sources d'enregistrement. Les ondes qui interfèrent étant sphériques, le pas des franges d'interférence n'est pas constant sur toute la surface : Aux environs d'un point quelconque M de la surface $\Sigma$, le pas p entre deux franges successives est égal à $\dfrac{\lambda_0}{\sin \varphi}$, $\varphi$ étant l'angle des rayons AM et BM qui interfèrent en M.

Lorsque la couche 8 est d'épaisseur très faible (de l'ordre de grandeur de la longueur d'onde $\lambda_0$), le réseau enregistré est un hologramme à deux dimensions : un rayon lumineux éclairant un tel hologramme rencontre une seule frange d'interférence. D'autre part, quelle que soit l'épaisseur de la couche 8, on obtient également les propriétés d'un hologramme à deux dimensions en recouvrant la couche 8 d'une mince couche métallique, ce qui a pour effet de rendre le réseau réfléchissant et de masquer l'épaisseur de la couche.

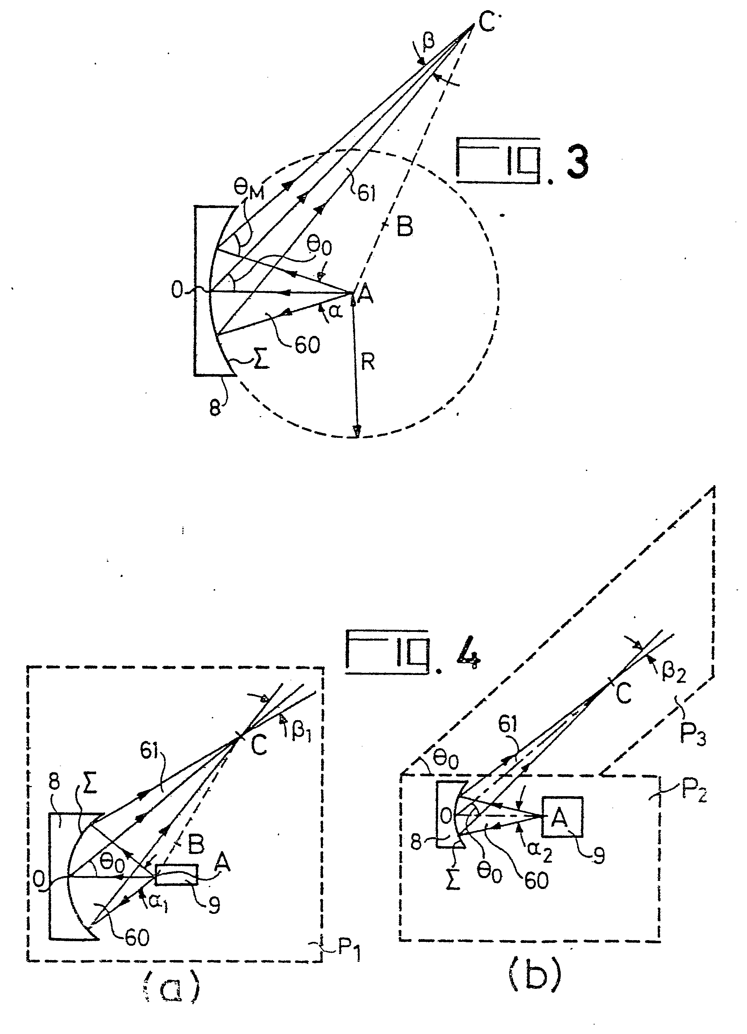

Sur la figure 3 est représentée la restitution d'un réseau enregistré sur la couche 8 par les ondes lumineuses 6 et 7, selon le schéma de la figure 2, puis développé, la surface $\Sigma$ étant ensuite métallisée. La source de restitution est placée au point A, à l'emplacement d'une des sources d'enregistrement. Cette source émet un faisceau 60 de longueur d'onde $\lambda$ qui est diffracté en réflexion par le réseau en plusieurs faisceaux d'ordres différents. On a représenté le faisceau d'ordre 1 : 61. Il a été démontré par Jobin-Yvon dans « Handbook on diffraction gratings » qu'on obtient une image stigmatique du point A en un point C tel que B et C soient en division harmonique avec la sphère de rayon R et de centre A, à condition que le rapport de division soit égal au rapport des longueurs d'onde $\lambda$ et $\lambda_0$, c'est-à-dire que $AB \cdot AC = R^2$ ; $m = \dfrac{R}{AB} = \dfrac{AC}{R}$ ; $\lambda = m\lambda_0$ pour le faisceau 61 d'ordre 1. Pour un faisceau d'ordre quelconque d'ordre K, la condition est alors $\lambda = \dfrac{m\lambda_0}{K}$. m étant fixé par le choix de $\lambda$ et de $\lambda_0$, le lieu des points B et C satisfaisant aux conditions $AB = \dfrac{R}{m}$ et $AC = mR$. A, B, C étant alignés, la position du point B détermine celle du point C. Par ailleurs, le choix de la position du point B détermine d'une part le plan de diffraction défini par la droite OA, axe du faisceau issu de A et par la droite AB, d'autre part l'angle de diffraction $\theta_M$ en tout point M de la surface $\Sigma$, en particulier l'angle $\theta_0$ au point O. En effet, la position de B détermine l'angle $\varphi$ des rayons AM et BM, donc le pas $p = \dfrac{\lambda_0}{\sin \varphi}$ aux environs du point M, donc l'angle de diffraction $\theta_M = \text{Arc } \sin \dfrac{\lambda}{p}$. L'ouverture du faisceau 60 dans le plan de la figure qui contient les points O, A, B, C étant $\alpha$, on peut déterminer, à l'aide de considérations géométriques et trigonométriques simples la valeur de l'ouverture du faisceau 61 dans le plan de la figure, $\beta$, en fonction de $\theta_0$ et $\alpha$. Lorsqu'on effectue le calcul de $\beta$ pour deux valeurs différentes de E $\alpha$ : $\alpha_1$ et $\alpha_2$, on constate que le rapport des deux valeurs de $\beta$ correspondantes $\beta_1$ et $\beta_2$ est beaucoup plus faible que le rapport $\dfrac{\alpha_1}{\alpha_2}$. Les valeurs $\beta_1$ et $\beta_2$ sont par ailleurs d'autant plus proches que l'angle $\theta_0$ est grand. Ces propriétés ont été énoncées, par souci de simplification, dans le plan de la figure, contenant les rayons émis par A et les rayons diffractés correspondants. Elles restent valables lorsque les rayons émis et diffractés ne sont pas dans le plan OABC. On se réfère toujours au même angle $\theta_0$ entre OA et OC.

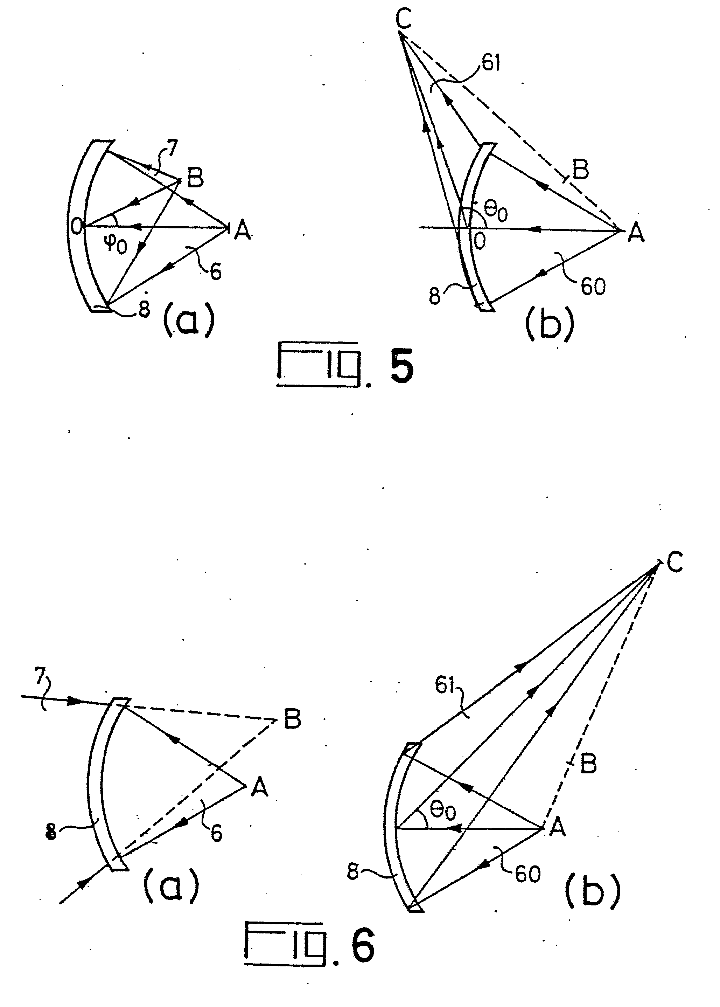

La figure 4 illustre l'application des propriétés des réseaux holographiques concaves, exposées ci-dessus, lorsque la source émettant le faisceau 60 est une source laser 9 telle que celle représentée sur la figure 1. On place la source 9 de longueur d'onde $\lambda$ au point A. L'image de la source 9 se forme en C. Le dispositif est représenté en (a) en coupe dans le plan OAC, comme pour la figure 2. On suppose, sans que cela soit limitatif de l'invention, que ce plan est le plan $P_1$ perpendiculaire à la jonction, c'est-à-dire le plan de la figure 1 (c). L'ouverture du faisceau 60 issu de la source 9 est alors $\alpha_1$ qui vaut typiquement 60°. L'image de A formée en C constitue un point source secondaire qui émet un faisceau 61 dont l'ouverture dans le plan de la figure est $\beta_1$ ; pour $\alpha_1 = 60°$ et par exemple $\theta_0 = 55°$, $\beta_1$ vaut environ 13°. En (b), le réseau est représenté en coupe

dans un plan $P_2$ perpendiculaire au précédent et qui est le plan de la jonction. La section du faisceau 60 par ce plan contenant le rayon axial OA, se diffracte en un faisceau situé dans un plan $P_3$ contenant le rayon OC et formant un angle $\theta_0$ avec le plan $P_2$. Le plan $P_3$ est également perpendiculaire au plan $P_1$ de (a). L'ouverture du faisceau 60 dans le plan $P_2$ est $\alpha_2$ qui vaut typiquement 20°. L'ouverture du faisceau 61 dans le plan $P_3$ est alors $\beta_2$ qui, pour $\theta_0 = 55°$ vaut approximativement 8,5°. On constate que pour cette valeur de $\theta_0 = 55°$, les valeurs $\beta_1$ et $\beta_2$ sont beaucoup plus voisines (dans un rapport 1,5) que celles de $\alpha_1$ et $\alpha_2$ (dans un rapport 3). Il reste à préciser les conditions d'enregistrement qui permettent d'atteindre ce résultat. On montre facilement que l'angle $\theta_0 = 55°$ est obtenu pour un angle de 110° environ entre OA et AB. Les supports photosensibles courants sont sensibles aux longueurs d'onde des sources laser à gaz classiques. Si l'on choisit $\lambda_0 = 454$ nm, qui est la longueur d'onde de la raie bleue d'un laser argon, pour un laser semiconducteur AsGa, dont la longueur d'onde est $\lambda = 900$ nm, le rapport m est approximativement égal à 2 : $AB = \dfrac{R}{2}$ et $AC = 2R$.

La valeur de R n'influe pas sur les propriétés du dispositif ; on peut choisir $R_2$ de l'ordre du cm, ce qui forme un réseau de quelques cm² de surface. La valeur de $\lambda$ est donnée à titre d'exemple. Elle dépend de la source utilisée pour former les points source A et B. La valeur $\theta_0$ donnée ci-dessus n'est pas limitative. Plus cette valeur est élevée, plus la résolution du réseau est grande mais alors le rendement de diffraction dans un ordre donné, donc la puissance de la source créée en C, diminue. La valeur 55° semble être un bon compromis.

L'énergie de l'onde incidente se répartissant, par la diffraction, dans les différents ordres, on ne peut recueillir en C qu'une fraction de cette énergie. Cette répartition de l'énergie dépend de la réponse du matériau photosensible formant la couche 8. Lorsque la modulation de relief obtenue est sinusoïdale, on recueille environ 33 % de l'énergie dans les faisceaux d'ordre + 1 et − 1. Certains matériaux ont une réponse non linéaire, si bien que la modulation enregistrée (de relief ou d'indice) ne suit pas la répartition d'intensité des interférences. C'est le cas du photoresist dont la réponse en créneaux permet d'obtenir dans l'ordre 1 une efficacité de 40 % environ.

Pour obtenir une meilleure efficacité de diffraction, donc une plus grande puissance du faisceau d'ordre 1, il est préférable d'utiliser l'hologramme enregistré dans ses trois dimensions, en supprimant la métallisation, et en choisissant judicieusement l'épaisseur de la couche 8. Les hologrammes de volume sont régis par la loi de Bragg. Cette loi détermine l'angle d'incidence du faisceau de restitution donnant l'efficacité de diffraction maximum, lorsque la longueur d'onde de restitution et le pas du réseau sont déterminés. Lorsqu'on s'écarte de la valeur de l'angle d'incidence donnée par la loi de Bragg, l'efficacité diminue. En choisissant une épaisseur de couche pas trop élevée (quelques dizaines de fois la longueur d'onde) et un matériau pour lequel la modulation d'indice est importante, avec un pas de strates pas trop faible, on peut maintenir une bonne efficacité de diffraction dans une gamme d'angles assez grande. Par exemple, une couche formée de gélatine bichromatée d'une dizaine de microns d'épaisseur enregistrée avec une longueur d'onde d'enregistrement d'environ 0,45 $\mu$m (dans le bleu) donne un réseau d'indice dont le pas est de l'ordre de 0,2 $\mu$m avec une variation d'indice d'environ 10 % d'une strate à la suivante. Avec une longueur d'onde de restitution d'environ 0,9 $\mu$m (rouge ou infra-rouge), on peut atteindre une efficacité de diffraction dans l'ordre 1 proche de 100 %, pour une ouverture de faisceau égale au maxximum de 60°.

Selon le mode d'enregistrement, le réseau peut être transmissif ou réfléchissant. La figure 5 montre l'enregistrement en (a) et la restitution en transmission en (b) d'un hologramme à trois dimensions, mais dont l'épaisseur est maintenue dans les limites définies ci-dessus. Les points A et B dont sont issues les ondes 6 et 7 d'enregistrement et le point C, image du point A par le réseau enregistré, sont en division harmonique par rapport au cercle de centre A et de rayon R sur lequel est placé la couche photosensible 8. On peut en effet appliquer à une couche d'une dizaine de microns d'épaisseur les résultats démontrés pour un hologramme de surface. Les points A et B sont situés d'un même côté par rapport à la couche 8 et les faisceaux 6 et 7 de longueur d'onde $\lambda_0$ sont des faisceaux divergents issus des points A et B. Cette situation conduit à la formation de strates dans la couche 8 qui, dans toute zone de la couche, sont dirigées selon la bissectrice des rayons issus de A et de B incidents dans cette zone, c'est-à-dire assez voisines des normales à la couche. Lors de la restitution, les rayons lumineux de longueur d'onde $\lambda$ issus de la source placée en A sont réfléchis par ces strates avec un angle $\theta$ qui dépend de la direction des rayons incidents, mais qui, d'après la direction des strates, est toujours supérieur à 90°, si bien que le réseau fonctionne en transmission. Lorsque les conditions $\dfrac{R}{AB} = \dfrac{AC}{R} = m$, avec $m = \dfrac{\lambda}{\lambda 0}$ sont respectées, tous les rayons réfléchis convergent au point C et l'anamorphose du faisceau 60 issu de A est obtenu.

La figure 6 montre l'enregistrement, en (a), et la restitution en réflexion, en (b), d'un hologramme à trois dimensions dont l'épaisseur est maintenue dans les limites définies ci-dessus. Pour obtenir un réseau réfléchissant, il faut réaliser l'enregistrement avec deux faisceaux 6 et 7 arrivant de part et d'autre sur la couche photosensible 8. Par exemple, le faisceau 6, issu du point A, est un faisceau divergent, tandis que le faisceau 7 est un faisceau provenant de l'autre côté de la couche 8 par rapport au point A et qui converge vers un point B, virtuel, puisque situé du même côté que A. Les strates obtenues, dirigées selon les bissectrices des rayons des deux faisceaux, sont plutôt dans une direction tangentielle à la couche. Lors de la restitution, les rayons issus de la source placée en A sont réfléchis par les strates avec un angle θ inférieur à 90°, si bien que le réseau fonctionne en réflexion. Les conditions de stigmatisme sont les mêmes que précédemment :

l'image de A se forme en C si $\dfrac{R}{AB} = \dfrac{AC}{R} = m$, m

étant le rapport des longueurs d'onde d'enregistrement et de restitution.

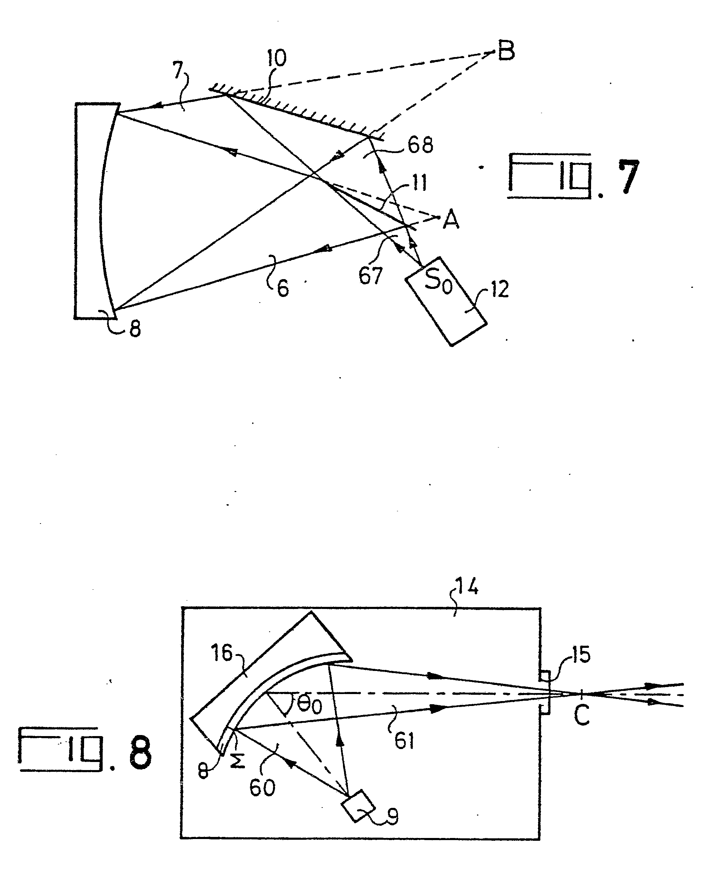

L'enregistrement d'un réseau sur la couche photosensible 8, quelque soit le type de réseau, nécessite deux faisceaux lumineux 6 et 7 de même longueur d'onde et en phase, donc pratiquement, provenant d'une source laser unique. Un exemple de dispositif de formation de ces deux faisceaux est représenté sur la figure 7. Ce dispositif convient pour l'enregistrement d'un réseau transmissif (ou bien réfléchissant après métallisation mais, même dans ce cas, le réseau est intrinsèquement transmissif). Pour obtenir un réseau réfléchissant, on pourrait facilement concevoir un dispositif du même genre. la configuration optique représentée sur la figure 7 est très simple. Une source laser 12, par exemple un laser argon, émet à partir d'un point source $S_0$ un faisceau lumineux 67 de longueur d'onde $\lambda_0$. Une lame semi-transparente 11 sépare ce faisceau 67 en un faisceau réfléchi 6 et un faisceau transmis 68 qui lui-même est réfléchi en un faisceau 7 par un miroir 10. Le facteur de réflexion de la lame 11 est choisi en fonction de celui du miroir 10, de façon à obtenir de préférence deux faisceaux 6 et 7 d'égale intensité. L'image de $S_0$ par la lame 11 est une image virtuelle située au point A. L'image de $S_0$ par le miroir 10 est une image virtuelle située au point B. Les faisceaux 6 et 7, qui sont par construction en phase et de même longueur d'onde $\lambda_0$ peuvent former des franges d'interférence sur la couche 8.

La couche photosensible 8 n'ayant, généralement que quelques μm d'épaisseur, elle est déposée sur un support qui, sur les figures précédentes, n'a pas été représenté. En vue d'une restitution par réflexion (réseau métallisé ou réseau intrinsèquement réfléchissant), il n'est pas nécessaire que le support ait de bonnes qualités optiques. Il doit seulement avoir une face concave, ce qui est facile à réaliser. Sur cette face, est ensuite déposé le matériau photosensible désiré. Par contre, en vue d'une restitution par transmission, il est préférable de disposer d'un support transparent, par exemple du verre, d'épaisseur assez faible pour ne pas perturber sensiblement le trajet des rayons lumineux. Les dimensions des systèmes optiques représentés sur les figures 3 et 6 étant de l'ordre du cm pour R, de quelques cm² pour la surface du réseau et de quelques cm pour la plus grande distance, AC, les différents éléments constitutifs de la source ainsi formée peuvent être contenus dans un boîtier de faible encombrement.

La figure 8 représente une source complète selon l'invention. Dans un boîtier 14 est placé un support 16, dont l'une des faces, $\Sigma$, est une surface sphérique, de rayon R, concave, recouverte d'une couche photosensible 8 préalablement insolée et développée de façon à former un réseau holographique, selon une configuration telle que celles représentées sur les figures 2, 5, 6, 7. Le boîtier 14 contient également un laser semiconducteur 9 dont les dimensions peuvent être très faibles, placé de la même façon, par rapport à la couche 8, que l'une des sources d'enregistrement. Pour obtenir un emplacement précis, il peut être nécessaire de prévoir des moyens mécaniques rendant solidaires le support 16 et, par exemple, un support pour le laser 12, comportant un point de référence précis constituant le point A dont il a été question plus haut, ce même point de référence ayant été utilisé pour l'enregistrement. Le faisceau 60 émis par le laser 9 et diffracté par la couche 8 se focalise en un point C. Dans la paroi, opaque, du boîtier 14, est aménagé une fenêtre transparente 15, afin de permettre le passage du faisceau diffracté 61, au voisinage du point C qui constitue la pupille de sortie de la source. Il peut être prévu des moyens de réglage du bloc laser 9-support 16 en vue de faire coïncider exactement le point C dans la fenêtre 15, sans modifier les emplacements respectifs de la source 9 et du support 16. La source représentée émet un faisceau issu de C, quasi-isotrope, de longueur d'onde $\lambda$ égale à celle du laser 9 et dont l'énergie peut aller de 30 % à 100 % de celle du laser 9.

## Revendications

1. Source de rayonnement optique destinée à fournir un faisceau divergent d'ouverture angulaire uniformisée à partir d'un laser semiconducteur à pupille émissive allongée dont les angles d'émission mesurés dans deux plans perpendiculaires contenant l'axe d'émission sont inégaux ; ladite source comprenant outre ledit laser semiconducteur des moyens optiques uniformisateurs de ladite ouverture angulaire, caractérisée en ce que lesdits moyens optiques uniformisateurs sont constitués par un réseau holographique concave (8) conjuguant le sommet (C) dudit faisceau divergent et le centre (A) de ladite pupille émissive allongée situé sur ledit axe d'émission (OA) ; la ligne joignant le sommet (C) et le centre (A) étant contenue dans celui desdits plans perpendiculaires ($P_1$, $P_2$) ayant l'angle d'émission ($\alpha_1$) le plus ouvert ; ledit réseau holographique concave (8) recevant perpendiculairement les rayons issus de ladite pupille émissive allongée.

2. Source selon la revendication 1, caractérisée en ce que le réseau est enregistré dans une couche photosensible déposée sur une surface sphérique au moyen de deux rayonnements cohérents, de même longueur d'onde, dont les fronts d'onde sont sphériques ; l'un desdits fronts d'ondes sphériques ayant même centre que ladite surface sphérique et ce centre commun étant confondu avec le centre (A) de ladite pupille émissive allongée.

3. Source selon la revendication 2, caractérisée en ce que le centre (A), de ladite pupille émissive allongée, le centre (B) de l'autre front d'onde sphérique et le sommet (C) sont en division harmonique avec ladite surface sphérique dans un rapport m égal à $k\frac{\lambda}{\lambda_0}$, $\lambda$ étant la longueur

d'onde du faisceau émis par le laser, $\lambda_0$ celle des rayonnements d'enregistrement et k étant l'ordre de diffraction dudit réseau holographique concave (8) qui à la longueur d'onde $\lambda$ assure la convergence au sommet (C) des rayons émis par le laser semiconducteur.

4. Source selon la revendication 3, caractérisée en ce que k = 1.

5. Source selon l'une des revendications 1 à 4, caractérisée en ce que l'effet de réseau résulte d'une surface diffractante en relief ; ladite surface diffractante étant métallisée afin de rendre ledit réseau réfléchissant.

6. Source selon la revendication 5, caractérisée en ce que ladite surface diffractante appartient à une couche formée de photorésist.

7. Source selon l'une des revendications 1 à 4, caractérisée en ce que ledit réseau possède une face convexe d'où est issu ledit faisceau divergent.

8. Source selon l'une des revendications 1 à 4, caractérisée en ce que ledit réseau possède une face concave d'où est issu ledit faisceau divergent.

9. Source selon l'une des revendications 7 et 8, caractérisée en ce que le réseau est un réseau d'indice en volume satisfaisant à la loi de Bragg.

10. Source selon la revendication 9, caractérisée en ce que ledit réseau est formé dans une couche de gélatine bichromatée.

11. Source selon l'une des revendications 1 à 10, caractérisée en ce que le laser semiconducteur est en arséniure de gallium, émettant un faisceau de longueur d'onde $\lambda$ = 900 $\mu$m.

## Claims

1. Optical radiation source intended for supplying a diverging beam with a uniformly open angle from a semi-conductor laser with an elongated opening for light emission, the emission angles of which, as measured in two perpendicular planes containing the axis of emission, are inequal ; said source comprising further said semiconductor laser of equalizing optical means of said angular opening ; characterized in that said equalizing optical means are formed of a concave holographic grating (8) synchronizing the apex (C) of said diverging beam and the center (A) of said elongated opening for light emission situated on the axis of emission (OA) ; with the line joining the apex (C) and the center (A) being contained in the one of said perpendicular planes $(P_1, P_2)$ which has the most open emission angle $(\alpha_1)$ ; and with said holographic grating (8) receiving the rays from said elongated emission opening perpendicularly.

2. Radiation source according to claim 1, characterized in that the grating is recorded in a photosensible layer applied onto a spherical surface by means of two coherent radiations of the same wave length, the fronts of which waves are spherical ; with one of said fronts of a spherical wave having the same center as said spherical surface and this common center being joined with the center (A) of said elongated emissive opening for light.

3. Radiation source according to claim 2, characterized in that the center (A) of said elongated emissive opening for light, the center (B) of the other spherical wave front and the apex (C) are in harmonic division with said spherical surface in a relation where m is equal to $k\frac{\lambda}{\lambda_0}$, with $\lambda$

being the wave length of the beam emitted by the laser, $\lambda_0$ that of the radiation of the recording and k being the order of diffraction of said concave holographic grating (8) which at the length of the wave $\lambda$ assures the convergence at the apex (C) of the rays emitted by the semiconductor laser.

4. Radiation source according to claim 3, characterized in that k = 1.

5. Radiation source according to one of claims 1 to 4, characterized in that the effect of the grating results in a diffracting surface in relief ; with said diffracting surface being metalized so as to render said grating reflecting.

6. Radiation source according to claim 5, characterized in that said diffracting surface belongs to a photoresistive layer.

7. Radiation source according to claims 1 to 4, characterized in that said grating has a convex face at which said divergent beam originates.

8. Radiation source according to claims 1 to 4, characterized in that said grating has a concave face at which said divergent beam originates.

9. Radiation source according to one of claims 7 and 8, characterized in that the grating is an index grating of a volume satisfying Bragg's law.

10. Radiation source according to claim 9, characterized in that said grating is formed in a layer of bichromated gelatine.

11. Radiation source according to any of claims 1 to 10, characterized in that the semiconductor laser is of gallium arsenide, emitting a beam of the wave length $\lambda$ = 900 $\mu$m.

## Ansprüche

1. Optische Strahlungsquelle für die Schaffung eines auseinandergehenden Strahlenbündels mit gleichmässig offenem Winkel von einem Halbleiter-Laser mit einem langgestreckten Ausstrahlungs-Lichtloch, dessen Ausstrahlungswinkel, der in zwei senkrechten Ebenen gemessen wird, welche die Ausstrahlungsachse enthalten, ungleich sind, wobei die genannte Strahlungsquelle weiterhin den genannten Halbleiter-Laser mit ausgleichenden optischen Mitteln der genannten Winkelöffnung einschliesst ; dadurch gekennzeichnet, dass die genannten ausgleichenden optischen Mittel aus einem holographischen Raster (8) gebildet sind, der den Scheitelpunkt (C) des auseinandergehenden Strahls und die Mitte des langgestreckten Ausstrahlungs-Lichtlochs, das auf der Ausstrahlungsachse (OA) liegt, zusammenbringt ; wobei die Linie, die sich mit dem Scheitelpunkt (C) und der Mitte (A), die in einer der genannten senkrechten Ebenen ($P_1$, $P_2$) mit dem am weitesten offenen Ausstrahlungswinkel ($\alpha_1$) liegt, vereinigt ; und wobei der holographische Raster (8) die Strahlen von dem langgestreckten Ausstrahlungs-Lichtloch empfängt.

2. Strahlungsquelle gemäss Anspruch 1, dadurch gekennzeichnet, dass der Raster in einer photoempfindlichen Schicht eingebettet ist, die auf einer kugelförmigen Fläche durch zwei kohärente Ausstrahlungen aufgebracht wurde, die von derselben Wellenlänge sind und deren Vorderseiten kugelförmig sind ; wobei eine der Vorderseiten der kugelförmigen Welle die gleiche Mitte haben wie die kugelförmige Fläche und diese gemeinsame Mitte mitte (A) des langgestreckten Ausstrahlungs-Lichtlochs zusammengebracht wird.

3. Strahlungsquelle gemäss Anspruch 2, dadurch gekennzeichnet, dass die genannte Mitte (A) des langgestrecten Ausstrahlungs-Lichtlochs, die Mitte (B) der anderen kugelförmigen Wellenvorderseite und der Scheitelpunkt (C) sich in harmonischer Division mit der kugelförmigen Fläche befinden in einem Verhältnis, in dem

$m = \frac{\lambda}{\lambda_0}$, wobei $\lambda$ die Wellenlänge des von dem Laser ausgestrahlten Strahls ist, $\lambda_0$ die der Ausstrahlung der Einbettung und k die Brechung des konkaven holographischen Rasters (8), der einer Wellenlänge $\lambda$ die Zusammenführung der vom Halbleiter-Laser ausgestrahlten Strahlen am Scheitelpunkt (C) sicherstellt.

4. Strahlungsquelle gemäss Anspruch 3, dadurch gekennzeichnet, dass k = 1.

5. Strahlungsquelle gemäss einem der Ansprüche 1 bis 4, dadurch gekennzeichnet, dass die Wirkung des Rasters zu einer Brechungsoberfläche in Rêlief führt ; wobei die genannte Brechungsoberfläche metallisiert ist, um den Raster reflektierend zu machen.

6. Strahlenquelle gemäss Anspruch 5, dadurch gekennzeichnet, dass die genannte Brechungsoberfläche zu einer photoresistiven Schicht gehört.

7. Strahlungsquelle gemäss Anspruch 1 bis 4, dadurch gekennzeichnet, dass der genannte Raster eine Konvexe Fläche hat, von der das auseinandergehende Strahlenbündel ausgeht.

8. Strahlungsquelle gemäss der Ansprüche 1 bis 4, dadurch gekennzeichnet, dass der Raster eine konkave Fläche hat, von der das auseinandergehende Strahlenbündel ausgeht.

9. Strahlungsquelle gemäss einem der Ansprüche 7 und 8, dadurch gekennzeichnet, dass der Raster ein Index-Raster von einem Volumen ist, das dem Bragg'schen Gesetz entspricht.

10. Strahlungsquelle gemäss Anspruch 9, dadurch gekennzeichnet, dass der Raster aus einer Schicht von Chromgelatine besteht.

11. Strahlungsquelle gemäss einem der Ansprüche 1 bis 10, dadurch gekennzeichnet, dass der Halbleiter-Later aus Gallium-Arsenmetall besteht und ein Strahlenbündel von der Wellenlänge $\lambda = 900$ $\mu$m ausstrahlt.

(a)

(b)

(c)

Fig.1

Fig.2

FIG. 3

FIG. 4

(a)

(b)

Fig. 5

Fig. 6

FIG. 7

FIG. 8

4